# FASCICULE DE BREVET EUROPEEN

(11) **EP 4 522 485 B1**
(45) Date de publication et mention de la délivrance du brevet: **04.02.2026**
(21) Numéro de dépôt: 23729808.8
(22) Date de dépôt: 12.05.2023
(51) Int. Cl.: B62B 7/06, B60N 2/28, B62B 7/12, B62B 9/12, B62J 1/16

(54) **SYSTÈME DE POUSSETTE CONVERTIBLE EN SIÈGE VÉLO**
IN EINEN FAHRRADSITZ UMWANDELBARES KINDERWAGENSYSTEM
PUSHCHAIR SYSTEM CONVERTIBLE INTO A BICYCLE SEAT

(30) Priorité: 12.05.2022 FR 2204503
(43) Date de publication de la demande: 19.03.2025
(73) Titulaire: LIF (Lab), 13120 Gardanne (FR); Barbaroux, Jean-Baptiste, 13120 Gardanne (FR); Lepage, Charlotte, 13120 Gardanne (FR)
(72) Inventeur: JOUFFRET, Patrick, 13120 Gardanne (FR); LANZ, Mathieu, 58000 Nevers (FR); POTHET, Emilien, 58600 Garchizi (FR); PRIMARD, Julien, 13120 Gardanne (FR); LEPAGE, Charlotte, 13120 Gardanne (FR); BARBAROUX, Jean-Baptiste, 13120 Gardanne (FR)
(74) Mandataire: Cabinet Beau de Loménie
(86) Numéro de dépôt international: PCT/FR2023/050687
(87) Numéro de publication internationale: WO 2023/218151

(56) Documents cités:
- BE-A3- 1 014 981
- CN-U- 214 057 767
- NL-A- 8 001 065
- US-A- 5 383 585

## Description

### Domaine Technique

La présente invention se rapporte au domaine général des poussettes pour enfants. Elle concerne plus précisément une poussette évolutive 1^{er} et 2^{ème} âge et convertible en siège vélo pour enfant.

### Technique antérieure

Les systèmes visant à faciliter le transport des enfants répondent à un besoin fondamental des familles. Ils tombent dans deux catégories principales que sont les jouets (tricycles, trottinettes, vélos, draisiennes, etc.) et les produits de puériculture (poussettes, sièges vélos, sacs de portage etc.). La présente invention s'inscrit dans cette seconde catégorie, et plus spécifiquement dans celle des poussettes et des sièges vélo.

Alors que la décarbonation des mobilités urbaines s'accélère face au changement climatique, les modes de mobilités actives, et en premier lieu le vélo (classique ou à assistance électrique), s'imposent comme les vecteurs clés de cette évolution.

L'un des enjeux pris en compte par la présente invention est de surmonter les principaux obstacles rencontrés par les parents-utilisateurs souhaitant passer de la voiture au vélo. En effet, ces obstacles découlent de l'incompatibilité entre le besoin de la poussette et l'usage d'un vélo. Cette incompatibilité s'exprime de différentes manières : multiplicité des intervenants (parents, grands-parents, gardes d'enfant) dans la journée de l'enfant (tous ne faisant pas du vélo), diversité des temps et lieux dans la journée de l'enfant (déplacement depuis et vers le domicile, crèche/école, parc/square, courses, etc.), mobilité et repos de l'enfant arrivé à destination.

Cette problématique a déjà été étudiée et a abouti à diverses solutions techniques que sont les systèmes de chargement de poussette sur un vélo, les poussettes convertibles en vélo et les hybrides sièges vélo/poussettes.

Cependant, dans l'état actuel des développements, aucune réponse proposée n'a abouti à une solution pleinement satisfaisante en termes d'usage notamment.

En effet, les systèmes de chargement de poussettes sur un vélo sont généralement difficiles d'usage car leur mise en œuvre est très dépendante des architectures respectives des deux produits à assembler en l'absence d'un standard de fixation. De plus, les poussettes n'ont le plus souvent pas été conçues dans cette optique, de sorte que leur chargement peut interférer avec le bon usage du vélo, de son équilibre, etc.

Quant aux vélos convertibles en poussettes, ils sont généralement très encombrants, lourds, onéreux et ne remplissent de façon satisfaisante ni la fonction d'une poussette, ni celle d'un vélo. Ces produits sont alors des compléments qui viennent s'ajouter aux objets de la famille impactant alors le budget de celles-ci. Ils sont par ailleurs difficiles à manœuvrer et à garer les rendant peu compatibles avec les contraintes de familles vivant en appartement notamment.

Les solutions hybrides siège vélo / poussette apparaissent ainsi comme une solution privilégiée et diverses solutions de ce type ont été développées. On pourra citer par exemple les publications US 5 383 585 A, CN 214 057 767 U, NL 8 001 065 A, BE 1 014 981 A3, FR 2,659,616, GB 2,538,053, US 5,071,146, WO 01/66403 et WO 2016/003359 qui décrivent différents systèmes de sièges vélo pour enfant convertibles en poussette.

Bien que ces systèmes répondent de manière générale à la problématique précitée, ils présentent chacun des inconvénients. Ainsi, le système décrit dans la publication WO 2016/003359 ne permet pas de régler l'inclinaison du dossier et, plus généralement, propose une structure d'assise typique d'un siège vélo qui ne répond pas pleinement aux besoins et usages d'une poussette, en particulier pour nouveau-né. De plus, ce système ne peut pas se plier en vue de son rangement. Quant à la poussette décrite dans la publication GB 2,538,053, il est nécessaire de la plier avant son chargement sur le porte-bagage de vélo.

De manière générale, les solutions connues de systèmes de sièges vélo convertibles en poussette se révèlent peu pratiques à l'usage. Par ailleurs, s'agissant de produits de puériculture, ces solutions ne sont pas toujours conformes aux cadres normatifs précis et multiples (des normes différentes existent pour les poussettes et les sièges vélos).

### Exposé de l'invention

L'invention a donc pour objet un système de poussette convertible en siège vélo qui ne présente pas les inconvénients précités.

Conformément à l'invention, ce but est atteint grâce à un système de poussette convertible en siège vélo apte à être configurée selon une première configuration déployée permettant son utilisation comme poussette et selon une seconde configuration pliée permettant son rangement et/ou son utilisation comme siège vélo, le système de poussette comprenant un châssis rigide pliable apte à être fixé sur un porte-bagage de vélo aussi bien dans une configuration déployée que dans une configuration pliée, le châssis comprenant :
- une structure d'assise avec dossier,
- un train de roues avant directionnelles monté de façon pivotante autour d'un axe transversal avant du châssis entre une position déployée et une position pliée,
- un train de roues arrière monté de façon pivotante autour d'un axe transversal arrière du châssis entre une position déployée et une position pliée,
- au moins un dispositif de verrouillage du train de roues avant dans sa position déployée et dans sa position pliée,
- un dispositif de fixation amovible sur un porte-bagage de vélo,
- un poussoir monté sur le châssis et dont la longueur est réglable entre une position haute dans laquelle il forme une poignée pour la poussette et une position basse dans laquelle il forme une retenue mécanique arrière pour le dossier du siège vélo, et
- au moins un mécanisme de verrouillage et de déverrouillage du train de roues arrière positionné entre l'axe arrière et l'axe avant du châssis, le mécanisme étant apte à coopérer avec un organe de butée solidaire du train de roues arrière entre une position de verrouillage dans laquelle il vient maintenir le train de roues arrière dans sa position déployée et une position de déverrouillage dans laquelle il permet le pivotement du train de roues arrière vers sa position pliée, le maintien du train de roues arrière dans sa position pliée étant assuré par le train de roues avant lorsque celui-ci est verrouillé dans sa position pliée.

Le système de poussette selon l'invention est remarquable notamment en ce qu'il possède deux configurations, à savoir une première configuration déployée et roulante permettant son utilisation comme poussette, et une seconde configuration pliée permettant son rangement et/ou son utilisation comme siège vélo. Plus précisément, le système de poussette peut être installé sur le porte-bagage du vélo de manière indiscriminée en configuration pliée ou dépliée et en conséquence être pliée ou dépliée de manière indiscriminée avant ou après son chargement ou déchargement du vélo.

Selon un mode de réalisation, le mécanisme de verrouillage et de déverrouillage du train de roues arrière comprend un loquet qui est monté de façon pivotante sur le châssis autour d'un axe transversal situé entre l'axe arrière et l'axe avant et qui comporte un ergot avant apte à venir en butée contre un élément de butée solidaire du train de roues avant et un ergot arrière apte à venir en butée contre l'organe de butée solidaire du train de roues arrière, le loquet étant monté sur un ressort apte à faire pivoter le loquet autour de son axe dans un sens opposé au sens de pivotement des trains de roues avant et arrière lors de leur changement de configuration, et l'organe de butée solidaire du train de roues arrière comprend une gâche rétractable apte à se déplacer entre une première position dans laquelle elle vient en butée contre l'ergot arrière du loquet pour empêcher le pivotement du train de roues arrières et une seconde position dans laquelle elle peut franchir librement l'ergot arrière.

Selon un autre mode de réalisation, le mécanisme de verrouillage et de déverrouillage du train de roues arrière comprend une came solidaire en rotation du train de roues avant et coopérant avec un organe suiveur qui est monté sur un côté du châssis et qui comprend un doigt avant monté sur ressort pour être maintenu en butée contre la came et un doigt arrière monté sur ressort, la rotation de la came permettant de déplacer l'organe suiveur entre une première position dans laquelle le doigt arrière est en butée contre l'organe de butée solidaire du train de roues arrière pour empêcher le pivotement de celui-ci et une seconde position dans laquelle il libère le pivotement du train de roues arrière.

Le dispositif de verrouillage du train de roues avant peut comprendre au moins un pion d'indexation mobile manuellement entre au moins une position de verrouillage dans laquelle il vient se loger dans un réceptacle du châssis et une position de déverrouillage dans laquelle il est rétracté hors du réceptacle du châssis, le pion d'indexation étant monté sur ressort afin de le maintenir en position de verrouillage en l'absence d'action manuelle sur celui-ci.

Le dispositif de verrouillage du train de roues avant peut comprendre deux pions d'indexation distincts venant se loger dans deux réceptacles distincts du châssis lorsqu'ils sont en position de verrouillage.

Selon un autre mode de réalisation, le dispositif de verrouillage du train de roues avant peut comprendre un levier commandé en rotation par le poussoir entre une position de verrouillage dans laquelle le levier permet de bloquer une penne de verrouillage solidaire du train de roues avant pour empêcher le pivotement de celui-ci, et une position de déverrouillage dans laquelle le levier libère la penne de verrouillage pour permettre le pivotement du train de roues avant, la penne de verrouillage empêchant le pivotement du train de roues avant par l'action d'un ressort en l'absence d'action sur le levier.

Le train de roues avant peut comprendre deux bras à l'extrémité desquels sont montés au moins une roue et qui sont reliés l'un à l'autre uniquement à leur autre extrémité par l'axe transversal avant du châssis de façon à faciliter un chargement sur un porte vélo lorsque le système de poussette est dans sa configuration déployée.

De préférence, lors du passage de leur position déployée à leur position pliée, les trains de roues avant et arrière pivotent dans le même sens de rotation en direction du dossier de la structure d'assise.

De préférence également, le système de poussette comprend en outre des accessoires de siège-vélo amovibles qui sont aptes à être assemblés sur le système de poussette lorsque celui-ci est utilisé comme siège-vélo.

Le système de poussette peut comprendre en outre une poignée avant située à l'avant du châssis et une poignée arrière située au niveau du dossier de la structure assise, les poignées avant et arrière permettant de soulever manuellement la poussette lors de son chargement ou déchargement.

Le train de roues avant peut comprendre au moins un système escamotable de repose-pieds.

### Brève description des dessins

[Fig. 1] La figure 1 est une vue en perspective d'un système de poussette selon l'invention dans sa configuration déployée.
[Fig. 2] La figure 2 est une vue en perspective du système de poussette de la figure 1 dans sa configuration pliée.
[Fig. 3A-3B] Les figures 3A et 3B sont des vues en coupe et de dessus du châssis du système de poussette des figures 1 et 2 montrant les dispositifs de verrouillage du train de roues avant dans ses positions déployée et pliée, respectivement.
[Fig. 4A-4B] Les figures 4A et 4B sont des vues en coupe du châssis du système de poussette équipé d'un autre mode de réalisation du mécanisme de verrouillage et de déverrouillage du train de roues avant.
[Fig. 5A-5B] Les figures 5A et 5B sont des vues en coupe respectivement de dessus et de côté du châssis du système de poussette des figures 1 et 2 montrant le mécanisme de verrouillage du train de roues arrière dans sa position déployée.
[Fig. 6A-6B] Les figures 6A et 6B sont des vues en coupe respectivement de dessus et de côté du châssis du système de poussette des figures 1 et 2 montrant le mécanisme de verrouillage du train de roues arrière dans sa position pliée.
[Fig. 7A-7B] Les figures 7A et 7B sont des vues en coupe et de côté du châssis d'un système de poussette selon une variante de réalisation de l'invention montrant un dispositif de verrouillage du train de roues avant dans ses positions déployée et pliée, respectivement.
[Fig. 8A-8B] Les figures 8A et 8B sont des vues en coupe du châssis du système de poussette équipé d'un dispositif de verrouillage du train de roues avant en position pliée selon un autre mode de réalisation.
[Fig. 9] La figure 9 est une vue du système de poussette selon l'invention dans sa configuration pliée et agrémentée d'accessoires amovibles de siège-vélo.

### Description des modes de réalisation

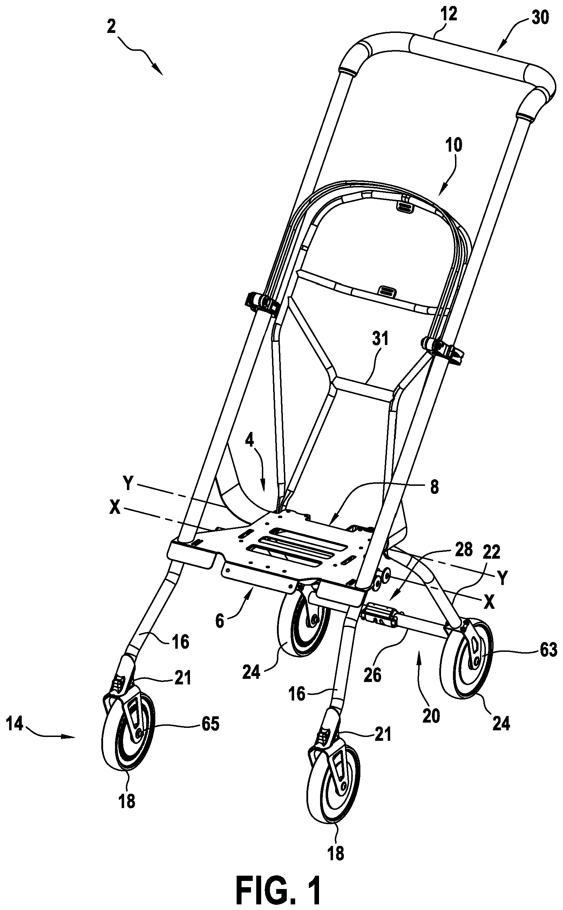

L'invention est relative à un système de poussette évolutive du type 1^{er} et 2^{ème} âge et convertible en siège vélo pour enfant tel que celui représenté sur les figures 1, 2 et 9.

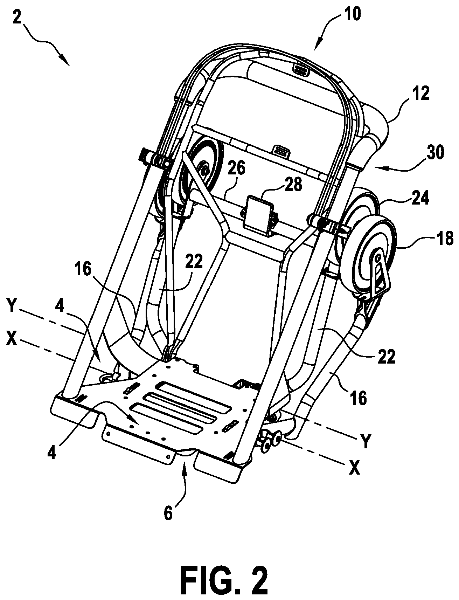

Le système de poussette 2 selon l'invention peut être manipulé entre deux configurations, à savoir une première configuration dite « déployée » (figure 1) permettant son utilisation comme poussette, et selon une seconde configuration dite « pliée » (figure 2) permettant son rangement et/ou son utilisation comme siège vélo.

Le système de poussette 2 comprend un châssis 4 rigide pliable apte à être fixé sur un porte-bagage de vélo (non représenté sur les figures) aussi bien lorsque le système de poussette est dans sa configuration déployée que dans sa configuration pliée.

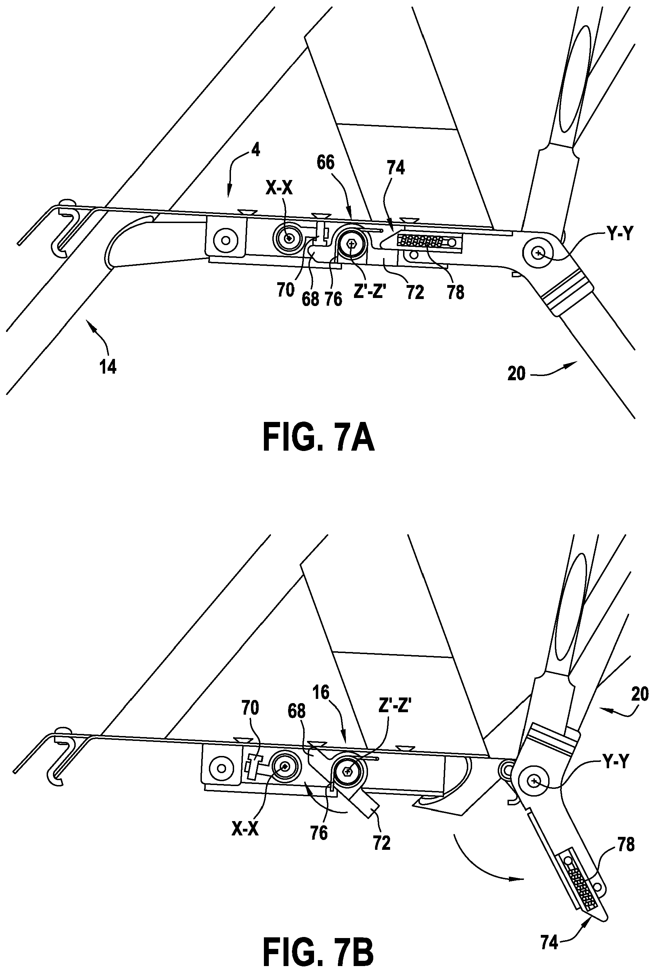

A cet effet, le châssis 4 comprend un dispositif de fixation amovible 6 sur un porte-bagage de vélo. De façon préférentielle (mais non limitative), ce dispositif de fixation amovible correspond au dispositif décrit dans la demande de brevet FR 2200378 déposée par la Demanderesse le 17 janvier 2022 et dont le contenu est intégralement incorporé par référence. Dans ce cas représenté par la figure 7, la plaque femelle 6a du dispositif de fixation amovible 6 est fixée sous une face inférieure du châssis et coopère avec la plaque mâle 6b qui est fixée sur le porte-bagage de vélo. Bien entendu, d'autres dispositifs de fixation amovible peuvent être envisagés.

Le châssis 4 comprend également une structure d'assise 8 munie d'un dossier inclinable 10 le tout étant recouvert d'une housse ayant une capote de protection contre la pluie et le soleil (non représentée sur les figures).

Un train de roues avant directionnelles 14 est monté de façon pivotante autour d'un axe transversal avant X-X du châssis entre une position déployée (figure 1) et une position pliée (figure 2). Comme décrit en détails ultérieurement, le pliage du train de roues avant s'effectue vers l'arrière.

Plus précisément, le train de roues avant comprend deux bras avant 16 à l'extrémité desquels sont montés au moins une roue 18 et qui sont reliés l'un à l'autre uniquement à leur autre extrémité par l'axe transversal avant X-X du châssis.

En d'autres termes, ce train de roues avant est dépourvu de barre reliant les bras avant entre eux au niveau des roues 18, ce qui permet de faciliter un chargement sur un porte vélo lorsque le système de poussette est dans sa configuration déployée.

Par ailleurs, les bras avant 16 du train de roues avant comprennent avantageusement au moins un système escamotable de repose-pieds.

Comme représenté sur la figure 1, le train de roues avant peut également comprendre un système 21 de blocage en rotation des roues et d'orientation des roues dans le sens de la marche.

Le châssis 4 comprend encore un train de roues arrière 20 qui est monté de façon pivotante entre une position déployée (figure 1) et une position pliée (figure 2) autour d'un axe transversal arrière Y-Y du châssis. Comme décrit en détails ultérieurement, le pliage du train de roues arrière s'effectue vers l'arrière et est assujetti au déverrouillage préalable du train de roues avant 14.

De façon plus précise, le train de roues arrière 20 comprend deux bras arrière 22 à l'extrémité desquels sont montés au moins une roue 24. Les bras arrière sont reliés, d'une part l'un à l'autre à leur extrémité munie des roues par une barre 26, et d'autre part au châssis 4 à leur extrémité opposée aux roues au niveau de l'axe transversal arrière Y-Y du châssis.

De façon avantageuse, le train de roues arrière 20 comprend en outre un système de frein dont l'actionnement s'effectue par l'intermédiaire d'un levier 28 monté sur la barre 26.

Le système de poussette selon l'invention comprend en outre un poussoir 30 monté sur le châssis 6 et muni à une extrémité supérieure d'une poignée 12 pour tenir et pousser le système de poussette.

La longueur du poussoir 30 est réglable (par exemple étant télescopique) entre une position haute correspondant à la configuration déployée en poussette et une position basse correspondant à la configuration pliée en siège-vélo dans laquelle il forme une retenue mécanique arrière pour le dossier du siège vélo.

Le système de poussette selon l'invention comprend encore une poignée avant (non représentée sur les figures) positionnée à l'avant du châssis, entre les jambes de l'enfant, et une poignée arrière 31 positionnée à l'arrière du dossier de l'assisse. Ces poignées permettent d'assurer un portage du système de poussette, notamment lorsqu'il s'agit de le charger ou de le décharger d'un porte-bagage de vélo.

Le système de poussette selon l'invention comprend encore un dispositif de verrouillage du train de roues avant dans sa position déployée et dans sa position pliée.

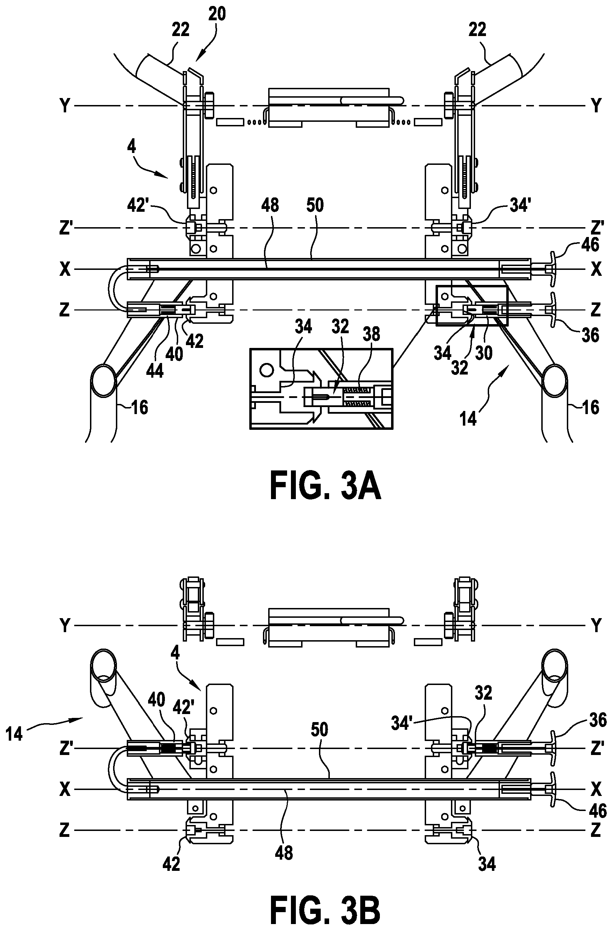

Dans le mode de réalisation représenté sur les figures 3A et 3B, le dispositif de verrouillage du train de roues avant comprend un pion d'indexation principal 32 qui est mobile manuellement entre deux positions de verrouillage dans lesquelles il vient se loger dans des réceptacles 34, 34' positionnés sur l'un des côtés du châssis 4 (figures 3A et 3B), et une position de déverrouillage dans laquelle il est rétracté hors des réceptacles du châssis.

De façon plus précise, lorsqu'il est dans une première position de verrouillage (Fig.3A), le pion d'indexation principal 32 se loge latéralement dans un premier réceptacle 34 qui est positionné sur l'un des côtés du châssis et qui s'étend selon un axe transversal Z-Z situé en avant de l'axe transversal avant X-X du châssis. Cette première position de verrouillage permet de verrouiller le train de roues avant dans sa position déployée.

Lorsqu'il est dans une seconde position de verrouillage (Fig.3B), le pion d'indexation principal 32 se loge latéralement dans un second réceptacle 34' qui est positionné sur le même côté du châssis et qui s'étend selon un axe transversal Z'-Z' situé entre l'axe transversal avant X-X et l'axe transversal arrière Y-Y du châssis. Cette seconde position de verrouillage permet de verrouiller le train de roues avant dans sa position pliée.

Par ailleurs, le pion d'indexation principal 32 est actionnable manuellement par l'intermédiaire d'une poignée 36 et est monté sur ressort 38 afin de le maintenir dans ses positions de verrouillage en l'absence d'action manuelle sur celui-ci.

Dans ce mode de réalisation, le dispositif de verrouillage du train de roues avant comprend un pion d'indexation auxiliaire 40 qui est également mobile manuellement entre deux positions de verrouillage dans lesquelles il vient se loger dans des réceptacles 42, 42' positionnés sur le côté opposé du châssis 4 (figures 3A et 3B), et une position de déverrouillage dans laquelle il est rétracté hors du réceptacle du châssis.

Plus précisément, lorsqu'il est dans une première position de verrouillage (Fig.3A) et correspondant à la première position de verrouillage du pion d'indexation principal 32, ce pion d'indexation auxiliaire 40 se loge latéralement dans un premier réceptacle 42 qui est aligné selon l'axe transversal Z-Z du châssis avec le premier réceptacle 34.

De même, lorsqu'il est dans la seconde position de verrouillage (Fig.3B) et correspondant à la seconde position de verrouillage du pion d'indexation principal 32, ce pion d'indexation auxiliaire 40 se loge latéralement dans un second réceptacle 42' qui est aligné selon l'axe transversal Z'-Z' du châssis avec le second réceptacle 34'.

Ce pion d'indexation auxiliaire 40 est monté sur ressort 44 afin de le maintenir dans ses positions de verrouillage en l'absence d'action manuelle sur celui-ci. De plus, il est actionnable depuis une poignée 46 positionnée du même côté du châssis que la poignée 36 d'actionnement du pion d'indexation principal 32. A cet effet, le pion d'indexation auxiliaire 40 est relié à la poignée 46 par l'intermédiaire d'un câble 48 traversant un tube 50 centré sur l'axe transversal avant X-X du châssis.

De la sorte, afin de déverrouiller le dispositif de verrouillage du train de roues avant dans le but de faire passer le train de roues avant de sa position déployée à sa position pliée (et réciproquement), il conviendra de tirer manuellement en même temps sur les deux poignées 36, 46 pour rétracter les pions d'indexation principal 32 et auxiliaire 40 hors de leur réceptacle respectif.

La présence de deux pions d'indexation (le pion d'indexation principal et le pion d'indexation auxiliaire) permet ainsi de renforcer la sécurité du dispositif de verrouillage du train de roues avant en évitant toute action intempestive sur celui-ci.

Bien entendu, il est possible de ne prévoir que le pion d'indexation principal. De même, dans une configuration à deux pions d'indexation, leur poignée d'actionnement respective peuvent être positionnés de chaque côté du châssis ou bien être combinées en une seule poignée à double action située d'un seul côté du châssis.

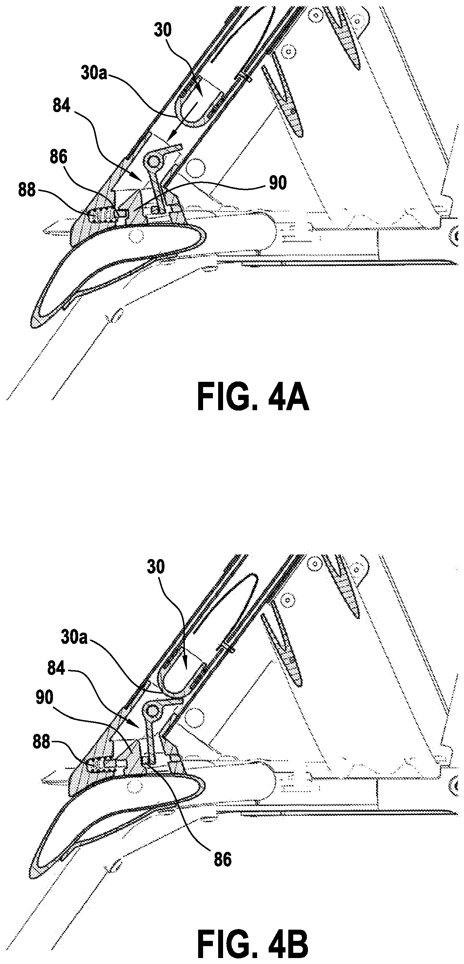

En liaison avec les figures 4A et 4B, on décrira un autre mode de réalisation du mécanisme de verrouillage et de déverrouillage du train de roues avant.

Dans cet autre mode de réalisation, l'extrémité inférieure 30a du poussoir 30 est apte à actionner la rotation d'un levier 84 monté en rotation sur le châssis. La rotation du levier 84 permet de déplacer en translation une tôle 86 munie d'un ajour entre une position de verrouillage (figure 4A) - maintenue au repos dans cette position par un ressort 88 - et une position de déverrouillage (figure 4B).

Plus précisément, la translation vers l'avant de la tôle 86 (sous l'action du poussoir) permet d'aligner son ajour avec une penne de verrouillage 90 solidaire du train de roues avant pour libérer la penne de verrouillage et ainsi permettre la libre rotation du train de roues avant (figure 4B).

Lorsque le poussoir 30 est déployé pour l'utilisation du système de poussette, le ressort 88 réengage le mécanisme de verrouillage par translation de la tôle 86 vers l'arrière. Le mécanisme de verrouillage étant en position fermée au repos, la penne de verrouillage 90 est conçue de manière à être capable d'actionner directement la tôle 86 dans le sens de la fermeture uniquement.

Une sécurité peut être envisagée pour éviter tout déverrouillage involontaire du mécanisme. Par exemple, une goupille, type cane anglaise (non représentée sur les figures 4A, 4B), positionnée sur un côté du poussoir pourrait faire effet de butée devant être actionnée pour permettre au poussoir d'être pleinement enfoncé et d'interagir avec le levier 84 par son extrémité inférieure 30a.

Le système de poussette selon l'invention comprend encore un mécanisme de verrouillage et de déverrouillage du train de roues arrière.

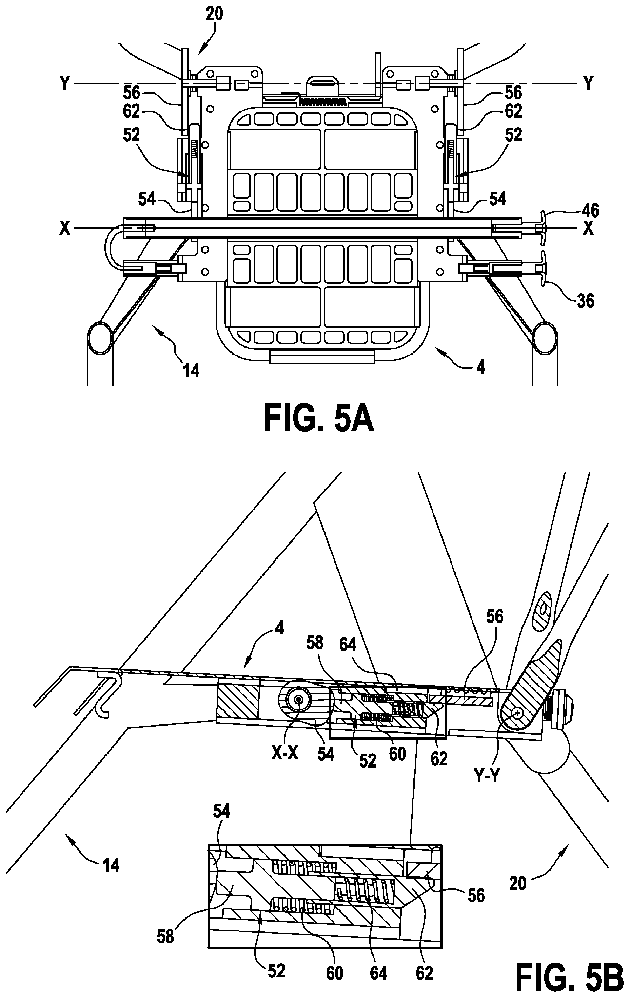

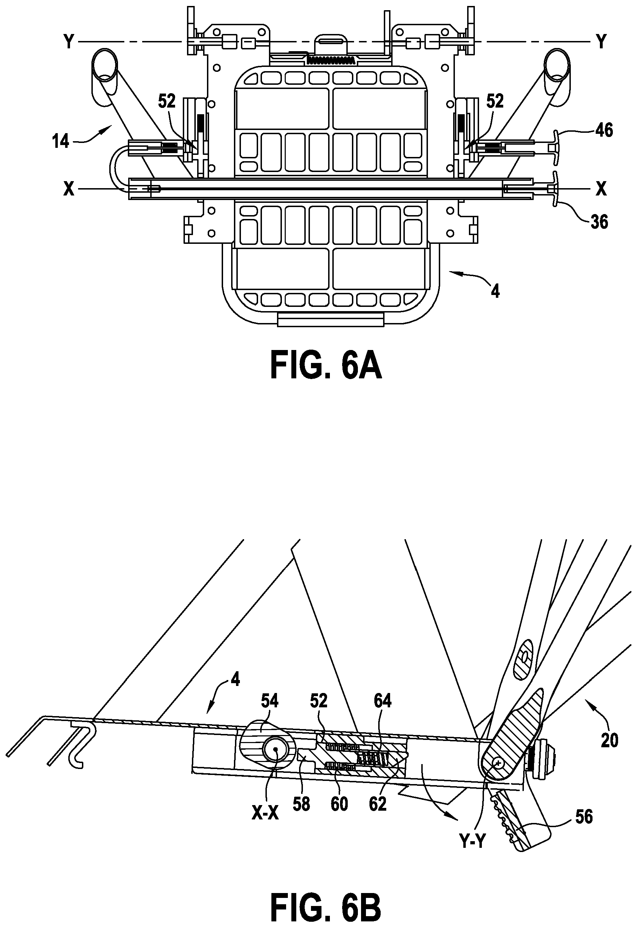

En liaison avec les figures 5A, 5B, 6A et 6B, on décrira un premier mode de réalisation d'un tel mécanisme.

Dans ce mode de réalisation, ce mécanisme comprend notamment une came 54 solidaire en rotation du train de roues avant qui est montée sur chaque côté du châssis 4 et qui coopère avec un organe suiveur 52également monté sur chaque côté du châssis.

Chaque organe suiveur 52 comprend un doigt avant 58 qui est monté sur un ressort 60 pour être maintenu en butée contre la came 54 solidaire du train de roues avant.

Chaque organe suiveur 52 comprend également un doigt arrière 62 qui est monté sur un autre ressort 64. La rotation de la came 54 permet de déplacer l'organe suiveur 52 entre une première position (correspondant au ressort 60 en position comprimée) dans laquelle le doigt arrière 62 vient en butée contre un organe de butée 56 solidaire du train de roues arrière (et formé par une plaque) pour empêcher le pivotement de celui-ci (figures 5A et 5B) et une seconde position dans laquelle il libère le pivotement du train de roues arrière (figures 6A et 6B).

Le fonctionnement de ce mécanisme pour le verrouillage et le déverrouillage du train de roues arrière est le suivant.

Dans la configuration déployée du système de poussette, les trains de roues avant et arrière sont en position déployée (figures 5A et 5B). Dans cette position, l'organe suiveur 52 est dans une position telle que son doigt arrière 62 est en butée contre la plaque 56 solidaire du train de roues arrière. Le train de roues arrière ne peut donc pas pivoter autour de l'axe transversal arrière Y-Y pour venir en position pliée.

Lorsque le train de roues avant commence à pivoter vers l'arrière autour de l'axe transversal avant X-X pour venir en position pliée, le doigt avant 58 de l'organe suiveur va suivre le chemin de came 54 solidaire du train de roues avant. Ce mouvement va se traduire par une translation vers l'avant du châssis de l'organe suiveur 52, et donc du doigt arrière 62 qui va se rétracter et ne plus venir en butée contre la plaque 56 solidaire du train de roues arrière (figures 6A et 6B). Le train de roues arrière est ainsi déverrouillé et peut alors pivoter vers l'arrière.

De préférence, le train de roues arrière comprend des éléments de butée 63 qui sont aptes à venir en butée contre des éléments de butée 65 du train de roues avant pour permettre à ce dernier d'entraîner le train de roues arrière lors du passage du système de poussette de sa configuration déployée à sa configuration pliée.

Le verrouillage du train de roues avant dans sa position pliée est alors assuré par le dispositif de verrouillage du train de roues avant décrit précédemment. Quant au maintien du train de roues arrière dans sa position pliée, il est assuré par le train de roues avant lorsque celui-ci est verrouillé dans sa position pliée.

Le passage du système de poussette de sa configuration pliée à sa configuration déployée s'effectue de la manière suivante. Dans un premier temps, le train de roues avant est déverrouillé au moyen du dispositif de verrouillage puis il est pivoté vers l'avant. Cette action permet également d'entraîner le train de roues arrière vers l'avant. Au cours de ce mouvement, si le train de roues arrière est entravé par un obstacle pendant sa rotation, la plaque 56 solidaire du train de roues arrière vient appuyer contre le doigt arrière 62 de l'organe suiveur, ce qui entraîne une rétractation du doigt arrière vers sa seconde position. Une fois que la plaque 56 a franchi le doigt arrière de l'organe suiveur, celui-ci se déploie sous l'effet du ressort 64 vers sa première position, entraînant un blocage du train de roues arrière dans sa position déployée. Quant au train de roues avant, il est verrouillé dans sa position déployée par le dispositif de verrouillage décrit précédemment.

En liaison avec les figures 7A et 7B, on décrira un second mode de réalisation du mécanisme de verrouillage et de déverrouillage du train de roues arrière.

Dans ce second mode de réalisation, il est prévu de positionner sur les deux côtés opposés du châssis 4 un loquet 66 qui est apte à pivoter autour d'un axe transversal Z'-Z' du châssis, cet axe Z'-Z' étant situé entre l'axe avant X-X et l'axe arrière Y-Y et étant parallèle à ces derniers.

Les loquets 66 portent chacun un ergot avant 68 qui est apte à venir en butée contre un élément de butée 70 solidaire du train de roues avant et un ergot arrière 72 qui est apte à venir en butée contre un organe de butée 74 solidaire du train de roues arrière,

De plus, chaque loquet 66 est monté sur un ressort 76 apte à faire pivoter le loquet autour de son axe Z'-Z' dans un sens opposé au sens de pivotement des trains de roues avant et arrière lors de leur changement de configuration.

Par ailleurs, dans ce mode de réalisation, l'organe de butée solidaire du train de roues arrière est formé par une gâche rétractable 74 qui est montée sur un ressort 78 et qui est apte à se déplacer entre une première position (correspondant au ressort 78 en position de repos) dans laquelle elle vient en butée contre l'ergot arrière 72 du loquet 66 pour empêcher le pivotement du train de roues arrières 20 (Fig.7A) et une seconde position (correspondant au ressort 78 en position comprimée) dans laquelle elle peut franchir librement l'ergot arrière 72 (Fig.7B).

Le fonctionnement de ce mécanisme pour le verrouillage et le déverrouillage du train de roues arrière est le suivant.

Dans la configuration déployée du système de poussette, les trains de roues avant et arrière sont en position déployée (Fig.7A). Dans cette position, le loquet 66 est maintenu par l'élément de butée 70 solidaire du train de roues avant dans une position telle que son ergot arrière 72 vient en butée contre la gâche rétractable 74 du train de roues arrière. Le train de roues arrière ne peut donc pas pivoter autour de l'axe transversal arrière Y-Y pour venir en position pliée.

Lorsque le train de roues avant commence à pivoter vers l'arrière autour de l'axe transversal avant X-X pour venir en position pliée, l'élément de butée 70 va pivoter en même temps que le train de roues avant, permettant ainsi au loquet 66 de pivoter en sens inverse autour de l'axe Z'-Z' (sous l'effet du ressort 76). Ce pivotement du loquet va entraîner un pivotement de son ergot arrière 72 qui va permettre de libérer la rotation du train de roues arrière. Le train de roues arrière est ainsi déverrouillé et peut alors pivoter vers l'arrière (Fig.6B), le reste du mouvement étant identique à ce qui a été décrit en liaison avec le précédent mode de réalisation du mécanisme de verrouillage et de déverrouillage du train de roues arrière.

Le passage du système de poussette de sa configuration pliée à sa configuration déployée s'effectue de la manière suivante. Dans un premier temps, le train de roues avant est déverrouillé au moyen du dispositif de verrouillage puis il est pivoté vers l'avant. Cette action permet également d'entraîner le train de roues arrière vers l'avant. Au cours de ce mouvement, si le train de roues arrière est entravé par un obstacle pendant sa rotation, la gâche rétractable 74 solidaire du train de roues arrière vient appuyer contre l'ergot arrière 72 du loquet 66, ce qui entraîne une rétractation de la gâche rétractable vers sa seconde position. Une fois que la gâche rétractable a franchi l'ergot arrière du loquet, celle-ci se déploie sous l'effet du ressort 78 vers sa première position, entraînant un blocage du train de roues arrière dans sa position déployée. Quant au train de roues avant, il est verrouillé dans sa position déployée par le dispositif de verrouillage décrit précédemment.

On décrira maintenant différentes caractéristiques avantageuses du système de poussette selon l'invention dans ses différents modes de réalisation.

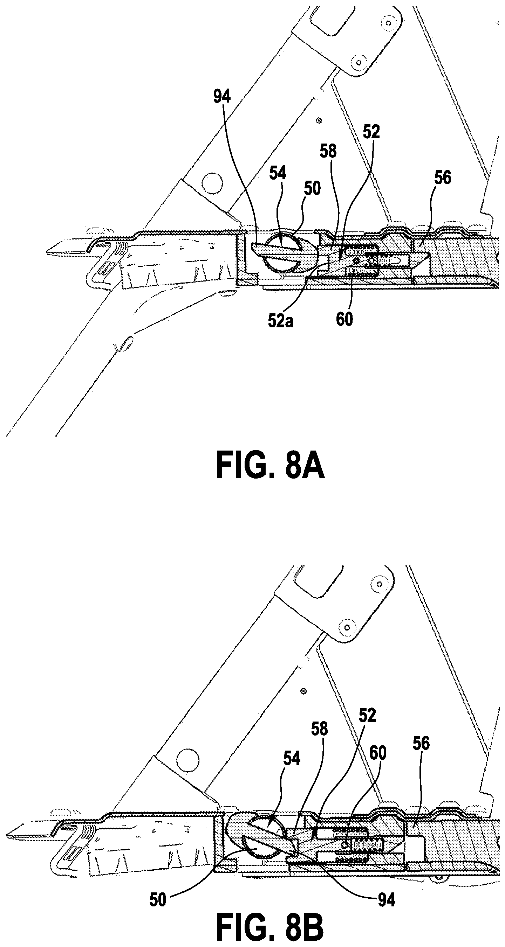

En liaison avec les figures 8A et 8B, on décrira à présent un autre dispositif de verrouillage du train de roues avant en position pliée. Ce dispositif de verrouillage est une évolution du mécanisme de verrouillage et de déverrouillage du train de roues arrière selon le premier mode de réalisation (relatif aux figures 5A, B, 6A et 6B).

Dans cette variante de réalisation, la came 54 qui est solidaire du train de roues avant comprend un doigt arrière 94 qui est positionné à l'opposé de tête de la came. Ce doigt arrière 94 et dépasse du côté opposé du tube 50 par lequel passe l'axe transversal avant X-X du châssis. La face de ce doigt arrière qui entre en premier en contact avec l'organe suiveur 52 lors d'une rotation dans le sens inverse des aiguilles d'une montre est biseautée.

Par ailleurs, l'organe suiveur 52 comprend, au niveau de son doigt avant 58, une tête usinée dont la forme intègre un premier évidement 52a réalisé sur la face avant et un second évidement (non représenté sur les figures) réalisé sur un côté. Le premier évidement 52a présente une forme complémentaire à celle du doigt arrière 94 de la came avec lequel il coopère.

Lors de la rotation du train de roues avant de la position déployée à la position pliée, le ressort 60 pousse l'organe suiveur 52 vers l'avant. Celui-ci reste alors en contact avec la tête de came 54, puis avec le tube 50. A l'approche de la fin de la rotation, le doigt arrière 94 de la came entre à son tour en contact avec le doigt avant 58 de l'organe suiveur par sa face biseautée.

La forme du doigt arrière 94 est telle que la rotation du tube 50 exerce un effort induisant la translation du doigt avant 58 de l'organe suiveur contre l'effort du ressort 60. Une fois passé et aligné avec le premier évidement 52a du doigt avant 58 de l'organe suiveur, ce dernier se translate vers l'avant sous l'effet du ressort 60, bloquant alors la rotation de la came 54, et par conséquence toute rotation du train de roues avant. Ce dernier se trouve ainsi verrouillé en position pliée.

Le dispositif de verrouillage du train de roues avant en position pliée tel que décrit ci-dessus est normalement fermé et ne peut être déverrouillé sans action extérieure sur le doigt avant 58 de l'organe suiveur de façon à forcer sa translation vers l'arrière à l'encontre de l'effort exercé par le ressort 60.

Cette action est réalisée à l'aide d'un levier de déverrouillage (non représenté sur les figures) qui est positionné sur le côté du dispositif mettant en œuvre l'organe suiveur 52 afin d'être rendu accessible pour l'utilisateur.

Un tel levier de déverrouillage est rotatif et comprend une poignée d'action manuelle à une extrémité et une tige d'interaction à l'extrémité opposée, chacun de ces extrémités étant située de part et d'autre de l'axe de rotation du levier de déverrouillage. La tige d'interaction est complémentaire du second évidement réalisé sur un côté du doigt avant 58 de l'organe suiveur.

L'action de l'utilisateur sur le levier de déverrouillage induit un effort sur le doigt avant 58 de l'organe suiveur qui est contraire à l'effort du ressort 60. Il en résulte en une translation vers l'arrière de l'organe suiveur. Ce mouvement libère alors le doigt arrière 94 de la came et permet la rotation à la fois du tube 50 et du bras avant 16 du train de roues avant.

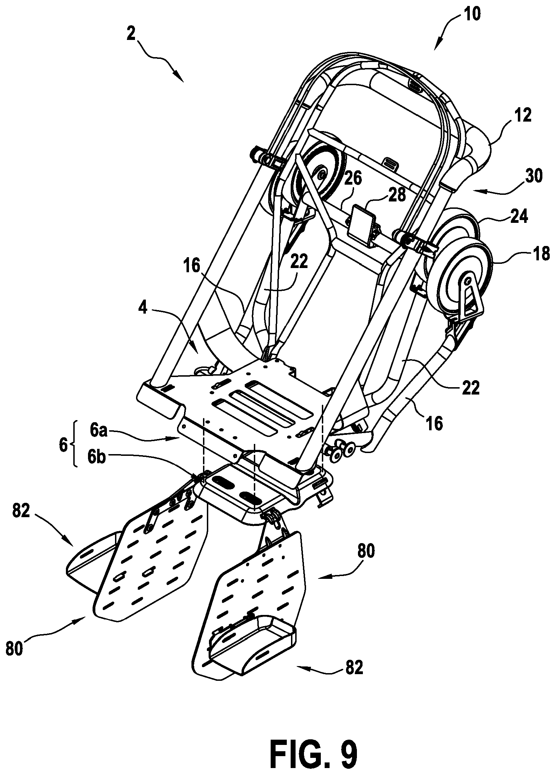

Comme représenté sur la figure 9, de façon avantageuse, le système de poussette 2 comprend en outre des accessoires de siège-vélo amovibles qui sont aptes à être assemblés sur le dispositif de fixation amovible, notamment sur la plaque mâle du dispositif lorsque celui-ci est conforme au dispositif décrit dans la demande de brevet FR 2200378.

Par exemple, ces accessoires sont deux plaques latérales 80 qui servent à protéger les jambes de l'enfant des rayons de la roue arrière du vélo et permettent la fixation de cale-pieds 82 amovibles et escamotables.

## Revendications

1. Système de poussette (2) convertible en siège vélo apte à être configurée selon une première configuration déployée permettant son utilisation comme poussette et selon une seconde configuration pliée permettant son rangement et/ou son utilisation comme siège vélo, le système de poussette comprenant un châssis (4) rigide pliable apte à être fixé sur un porte-bagage de vélo aussi bien dans une configuration déployée que dans une configuration pliée, le châssis comprenant :
- une structure d'assise (8) avec dossier (10),
- un train de roues avant (14) directionnelles monté de façon pivotante autour d'un axe transversal avant (X-X) du châssis entre une position déployée et une position pliée,
- un train de roues arrière (20) monté de façon pivotante autour d'un axe transversal arrière (Y-Y) du châssis entre une position déployée et une position pliée,
- au moins un dispositif de verrouillage du train de roues avant dans sa position déployée et dans sa position pliée,
- un dispositif de fixation amovible (6) sur un porte-bagage de vélo,
- un poussoir (30) monté sur le châssis et dont la longueur est réglable entre une position haute dans laquelle il forme une poignée (12) pour la poussette et une position basse dans laquelle il forme une retenue mécanique arrière pour le dossier du siège vélo, et
- au moins un mécanisme de verrouillage et de déverrouillage du train de roues arrière positionné entre l'axe arrière (Y-Y) et l'axe avant (X-X) du châssis, le mécanisme étant apte à coopérer avec un organe de butée (56 ; 74) solidaire du train de roues arrière entre une position de verrouillage dans laquelle il vient maintenir le train de roues arrière dans sa position déployée et une position de déverrouillage dans laquelle il permet le pivotement du train de roues arrière vers sa position pliée, le maintien du train de roues arrière dans sa position pliée étant assuré par le train de roues avant lorsque celui-ci est verrouillé dans sa position pliée.

2. Système de poussette selon la revendication 1, dans laquelle :
- le mécanisme de verrouillage et de déverrouillage du train de roues arrière comprend un loquet (66) qui est monté de façon pivotante sur le châssis autour d'un axe transversal (Z-Z') situé entre l'axe avant (X-X) et l'axe arrière (Y-Y) et qui comporte un ergot avant (68) apte à venir en butée contre un élément de butée (70) solidaire du train de roues avant et un ergot arrière (72) apte à venir en butée contre l'organe de butée solidaire du train de roues arrière, le loquet (66) étant monté sur un ressort (76) apte à faire pivoter le loquet autour de son axe (Z-Z') dans un sens opposé au sens de pivotement des trains de roues avant et arrière lors de leur changement de configuration, et
- l'organe de butée solidaire du train de roues arrière comprend une gâche rétractable (74) apte à se déplacer entre une première position dans laquelle elle vient en butée contre l'ergot arrière du loquet pour empêcher le pivotement du train de roues arrières et une seconde position dans laquelle elle peut franchir librement l'ergot arrière (72).

3. Système de poussette selon la revendication 1, dans laquelle le mécanisme de verrouillage et de déverrouillage du train de roues arrière comprend une came (54) solidaire en rotation du train de roues avant et coopérant avec un organe suiveur (52) qui est monté sur un côté du châssis et qui comprend un doigt avant (58) monté sur ressort (60) pour être maintenu en butée contre la came et un doigt arrière (62) monté sur ressort (64), la rotation de la came permettant de déplacer l'organe suiveur entre une première position dans laquelle le doigt arrière est en butée contre l'organe de butée (56) solidaire du train de roues arrière pour empêcher le pivotement de celui-ci et une seconde position dans laquelle il libère le pivotement du train de roues arrière.

4. Système de poussette selon l'une quelconque des revendications 1 à 3, dans laquelle le dispositif de verrouillage du train de roues avant comprend au moins un pion d'indexation (32, 40) mobile manuellement entre au moins une position de verrouillage dans laquelle il vient se loger dans un réceptacle (34, 34', 42, 42') du châssis et une position de déverrouillage dans laquelle il est rétracté hors du réceptacle du châssis, le pion d'indexation étant monté sur ressort (38, 44) afin de le maintenir en position de verrouillage en l'absence d'action manuelle sur celui-ci.

5. Système de poussette selon la revendication 4, dans laquelle le dispositif de verrouillage du train de roues avant comprend deux pions d'indexation (32, 40) distincts venant se loger dans deux réceptacles distincts du châssis lorsqu'ils sont en position de verrouillage.

6. Système de poussette selon l'une quelconque des revendications 1 à 3, dans laquelle le dispositif de verrouillage du train de roues avant comprend un levier (84) commandé en rotation par le poussoir (30) entre une position de verrouillage dans laquelle le levier permet de bloquer une penne de verrouillage (90) solidaire du train de roues avant pour empêcher le pivotement de celui-ci, et une position de déverrouillage dans laquelle le levier libère la penne de verrouillage pour permettre le pivotement du train de roues avant, la penne de verrouillage empêchant le pivotement du train de roues avant par l'action d'un ressort (88) en l'absence d'action sur le levier (84).

7. Système de poussette selon l'une quelconque des revendications 1 à 6, dans laquelle le train de roues arrière comprend des éléments de butée (63) aptes à venir en butée contre des éléments de butée (65) du train de roue avant pour permettre à ce dernier d'entraîner le train de roues arrière lors du passage du système de poussette de sa configuration déployée à sa configuration pliée.

8. Système de poussette selon l'une quelconque des revendications 1 à 7, dans laquelle le train de roues avant (14) comprend deux bras (16) à l'extrémité desquels sont montés au moins une roue (18) et qui sont reliés l'un à l'autre uniquement à leur autre extrémité par l'axe transversal avant (X-X) du châssis de façon à faciliter un chargement sur un porte vélo lorsque le système de poussette est dans sa configuration déployée.

9. Système de poussette selon l'une quelconque des revendications 1 à 8, dans laquelle, lors du passage de leur position déployée à leur position pliée, les trains de roues avant (14) et arrière (20) pivotent dans le même sens de rotation en direction du dossier (10) de la structure d'assise.

10. Système de poussette selon l'une quelconque des revendications 1 à 9, comprenant en outre des accessoires (80, 82) de siège-vélo amovibles.

11. Système de poussette selon l'une quelconque des revendications 1 à 10, comprenant en outre une poignée avant située à l'avant du châssis et une poignée arrière située au niveau du dossier de la structure assise, les poignées avant et arrière permettant de soulever manuellement la poussette lors de son chargement ou déchargement.

12. Système de poussette selon l'une quelconque des revendications 1 à 11, dans laquelle le train de roues avant comprend au moins un système escamotable de repose-pieds.

## Patentansprüche

1. Kinderwagensystem (2), das in einen Fahrradsitz umwandelbar ist, der geeignet ist, um in einer ersten ausgeklappten Konfiguration, die seine Verwendung als Kinderwagen ermöglicht, und in einer zweiten zusammengeklappten Konfiguration, die seine Aufbewahrung und/oder seine Verwendung als Fahrradsitz ermöglicht, das Kinderwagensystem umfassend einen klappbaren starren Rahmen (4) der geeignet ist, um sowohl in einer ausgeklappten als auch in einer zusammengeklappten Konfiguration an einem Fahrradgepäckträger befestigt zu werden, der Rahmen umfassend:
- eine Sitzstruktur (8) mit Rückenlehne (10),
- einen lenkbaren Vorderradsatz (14), der schwenkbar um eine vordere Querachse (X-X) des Rahmens zwischen einer ausgeklappten und einer zusammengeklappten Stellung montiert ist,
- einen Hinterradsatz (20), der schwenkbar um eine hintere Querachse (Y-Y) des Rahmens zwischen einer ausgeklappten und einer zusammengeklappten Stellung montiert ist,
- mindestens eine Verriegelungsvorrichtung des Vorderradsatzes in seiner ausgeklappten und seiner zusammengeklappten Stellung,
- eine abnehmbare Befestigungsvorrichtung (6) an einem Fahrradgepäckträger,
- einen Drücker (30), der an dem Rahmen montiert ist und dessen Länge zwischen einer oberen Stellung, in der er einen Griff (12) für den Kinderwagen bildet, und einer unteren Stellung, in der er eine hintere mechanische hintere Halterung für die Rückenlehne des Fahrradsitzes bildet, verstellbar ist, und
- mindestens einen Ver- und Entriegelungsmechanismus des hinteren Radsatzes, der zwischen der hinteren Achse (Y-Y) und der vorderen Achse (X-X) des Rahmens positioniert ist, wobei der Mechanismus geeignet ist, mit einem fest mit dem Hinterradsatz verbundenen Anschlagorgan (56; 74) zwischen einer Verriegelungsposition, in der es den Hinterradsatz in seiner ausgeklappten Stellung hält, und einer Entriegelungsposition, in der es das Schwenken des Hinterradsatzes in seine zusammengeklappte Stellung ermöglicht, zusammenzuwirken, wobei das Halten des hinteren Radsatzes in seiner zusammengeklappten Stellung durch den vorderen Radsatz gewährleistet wird, wenn dieser in seiner zusammengeklappten Stellung verriegelt ist.

2. Kinderwagensystem nach Anspruch 1, wobei:
- der Mechanismus zum Verriegeln und Entriegeln des hinteren Radsatzes eine Klinke (66) umfasst, die um eine Querachse (Z-Z'), die sich zwischen der Vorderachse (X-X) und der Hinterachse (Y-Y) befindet, schwenkbar an dem Rahmen montiert ist und die einen vorderen Zapfen (68), der geeignet ist, um an einem Anschlagelement (70) in Anlage zu kommen, das mit dem vorderen Radsatz fest verbunden ist, und einen hinteren Zapfen (72), geeignet ist, um an dem Anschlagorgan hin Anlage zu kommen, das fest mit dem hinteren Radsatz verbunden ist, umfasst, wobei die Klinke (66) an einer Feder (76) montiert ist, die geeignet ist, die Klinke um ihre Achse (Z-Z') in einer Richtung entgegen der Schwenkrichtung des vorderen und des hinteren Radsatzes bei deren Konfigurationsänderung zu schwenken, und
- das Anschlagorgan, das fest mit dem Hinterradsatz verbunden ist, ein einziehbares Schließblech (74) umfasst, das geeignet ist, um sich zwischen einer ersten Stellung, in der es an dem hinteren Zapfen der Klinke anliegt, um das Schwenken des Hinterradsatzes zu verhindern, und einer zweiten Stellung, in der es den hinteren Zapfen (72) frei überqueren kann, zu bewegen.

3. Kinderwagensystem nach Anspruch 1, wobei der Mechanismus zum Verriegeln und Entriegeln des hinteren Radsatzes einen Nocken (54) umfasst, der drehfest mit dem vorderen Radsatz ist und mit einem Mitnehmerorgan (52) zusammenwirkt, das auf einer Seite des Rahmens montiert ist und einen vorderen Finger (58), der auf einer Feder (60) montiert ist, um in Anschlag an dem Nocken gehalten zu werden, und einen hinteren Finger (62), der auf einer Feder (64) montiert ist, umfasst, wobei es die Drehung der Nocke ermöglicht, das Mitnehmerorgan zwischen einer ersten Stellung, in der der hintere Finger an dem Anschlagorgan (56) anliegt, das fest mit dem Hinterradsatz verbunden ist, um das Schwenken des Hinterradsatzes zu verhindern, und einer zweiten Stellung, in der er das Schwenken des Hinterradsatzes freigibt, zu bewegen.

4. Kinderwagensystem nach einem der Ansprüche 1 bis 3, wobei die Verriegelungsvorrichtung des Vorderradsatzes mindestens einen Indexierungsstift (32, 40) umfasst, der manuell zwischen mindestens einer Verriegelungsposition, in der er in einer Aufnahme (34, 34', 42, 42') des Rahmens aufgenommen ist, und einer Entriegelungsposition, in der er aus der Aufnahme des Rahmens zurückgezogen wird, bewegbar ist, wobei der Indexierungsstift auf der Feder (38, 44) montiert ist, um ihn in Abwesenheit einer manuellen Betätigung in Verriegelungsposition zu halten.

5. Kinderwagensystem nach Anspruch 4, wobei die Verriegelungsvorrichtung des Vorderradsatzes zwei verschiedene Indexierungsstifte (32, 40) umfasst, die in zwei getrennten Aufnahmen des Rahmens aufgenommen werden, wenn sie in Verriegelungsposition sind.

6. Kinderwagensystem nach einem der Ansprüche 1 bis 3, wobei die Verriegelungsvorrichtung des Vorderradsatzes einen Hebel (84) umfasst, der durch den Drücker (30) zwischen einer Verriegelungsposition, in der der Hebel es ermöglicht, eine fest mit dem Vorderradsatz verbundene Verriegelungsnase (90) zu arretieren, um dessen Schwenken zu verhindern, und einer Entriegelungsposition, in der der Hebel die Verriegelungsnase freigibt, um das Schwenken des Vorderradsatzes zu ermöglichen, drehbar gesteuert wird, die Verriegelungsnase das Schwenken des Vorderradsatzes durch die Wirkung einer Feder (88) in Abwesenheit einer Betätigung des Hebels (84) verhindert.

7. Kinderwagensystem nach einem der Ansprüche 1 bis 6, wobei der Hinterradsatz Anschlagelemente (63) umfasst, die geeignet sind, um an Anschlagelementen (65) des Vorderradsatzes in Anlage zu kommen, um es letzterem zu ermöglichen, den Hinterradsatz anzutreiben, wenn das Kinderwagensystem von seiner ausgeklappten Konfiguration in seine zusammengeklappte Konfiguration übergeht.

8. Kinderwagensystem nach einem der Ansprüche 1 bis 7, wobei der Vorderradsatz (14) zwei Arme (16) umfasst, an deren Ende mindestens ein Rad (18) montiert ist und die nur an ihrem anderen Ende durch die vordere Querachse (X-X) des Rahmens miteinander verbunden sind, um das Laden auf einen Fahrradgepäckträger zu ermöglichen, wenn das Kinderwagensystem in seiner ausgeklappten Konfiguration ist.

9. Kinderwagensystem nach einem der Ansprüche 1 bis 8, wobei beim Übergang von ihrer ausgeklappten Stellung in ihre zusammengeklappte Stellung der Vorder- (14) und der Hinterradsatz (20) in die gleiche Drehrichtung in Richtung der Rückenlehne (10) der Sitzstruktur schwenken.

10. Kinderwagensystem nach einem der Ansprüche 1 bis 9, ferner umfassend abnehmbare Fahrradsitzzubehörteile (80, 82).

11. Kinderwagensystem nach einem der Ansprüche 1 bis 10, ferner umfassend einen vorderen Griff an der Vorderseite des Rahmens und einen hinteren Griff an der Rückenlehne der Sitzstruktur, wobei der vordere und der hintere Griff ein manuelles Anheben des Kinderwagens beim Be- und Entladen ermöglichen.

12. Kinderwagensystem nach einem der Ansprüche 1 bis 11, wobei der Vorderradsatz mindestens ein einklappbares Fußstützensystem umfasst.

## Claims

1. A stroller system (2) convertible into a bicycle seat able to be configured in a first deployed configuration allowing its use as a stroller and in a second folded configuration allowing its storage and/or its use as a bicycle seat, the stroller system comprising a rigid foldable chassis (4) able to be fixed to a bicycle luggage rack both in a deployed configuration and a folded configuration, the chassis comprising:
- a seat base structure (8) with a backrest (10),
- a set of steerable front wheels (14) pivotally mounted about a front transverse axis (X-X) of the chassis between a deployed position and a folded position,
- a set of rear wheels (20) pivotally mounted about a rear transverse axis (Y-Y) of the chassis between a deployed position and a folded position,
- at least one device for locking the front wheel set in its deployed position and in its folded position,
- a removable fixing device (6) on a bicycle luggage rack,
- a pusher (30) mounted on the chassis and whose length is adjustable between a high position in which it forms a handle (12) for the stroller and a low position in which it forms a rear mechanical retainer for the backrest of the bicycle seat, and
- at least one mechanism for locking and unlocking the rear wheel set positioned between the rear axis (Y-Y) and the front axis (X-X) of the chassis, the mechanism being able to cooperate with a stop member (56; 74) secured to the rear wheel set between a locking position in which it maintains the rear wheel set in its deployed position and an unlocking position in which it allows the rear wheel set to pivot towards its folded position, the rear wheel set being maintained in its folded position by the front wheel set when the latter is locked in its folded position.

2. The stroller system according to claim 1, wherein:
- the rear wheel set locking and unlocking mechanism comprises a latch (66) which is pivotally mounted on the chassis about a transverse axis (Z-Z') located between the front axis (X-X) and the rear axis (Y-Y) and which includes a front lug (68) able to come into abutment against a stop element (70) secured to the front wheel set and a rear lug (72) able to come into abutment against the stop member secured to the rear wheel set, the latch (66) being mounted on a spring (76) able to pivot the latch about its axis (Z-Z') in a direction opposite to the direction of pivoting of the front and rear wheel sets when their configuration changes, and
- the stop member secured to the rear wheel set comprises a retractable strike (74) able to move between a first position in which it comes into abutment against the rear lug of the latch to prevent the rear wheel set from pivoting and a second position in which it can freely pass over the rear lug (72).

3. The stroller system according to claim 1, wherein the rear wheel set locking and unlocking mechanism comprises a cam (54) secured in rotation to the front wheel set and cooperating with a follower member (52) which is mounted on one side of the chassis and which comprises a front finger (58) mounted on a spring (60) to be maintained in abutment against the cam and a rear finger (62) mounted on a spring (64), the rotation of the cam allowing the follower member to move between a first position in which the rear finger is in abutment against the stop member (56) secured to the rear wheel set in order to prevent the latter from pivoting and a second position in which it releases the pivoting of the rear wheel set.

4. The stroller system according to any one of claims 1 to 3, wherein the front wheel set locking device comprises at least one indexing peg (32, 40) manually movable between at least one locking position in which it is housed in a receptacle (34, 34', 42, 42') of the chassis and an unlocking position in which it is retracted out of the receptacle of the chassis, the indexing peg being mounted on a spring (38, 44) in order to maintain it in the locking position in the absence of manual action on it.

5. The stroller system according to claim 4, wherein the front wheel set locking device comprises two separate indexing pegs (32, 40) housed in two separate receptacles of the chassis when they are in the locking position.

6. The stroller system according to any one of claims 1 to 3, wherein the front wheel set locking device comprises a lever (84) controlled in rotation by the pusher (30) between a locking position in which the lever makes it possible to block a locking bolt (90) secured to the front wheel set in order to prevent the latter from pivoting, and an unlocking position in which the lever releases the locking bolt to allow the front wheel set to pivot, the locking bolt preventing the front wheel set from pivoting by the action of a spring (88) in the absence of action on the lever (84).

7. The stroller system according to any one of claims 1 to 6, wherein the rear wheel set comprises stop elements (63) able to come into abutment against stop elements (65) of the front wheel set to allow the latter to drive the rear wheel set when the stroller system moves from its deployed configuration to its folded configuration.

8. The stroller system according to any one of claims 1 to 7, wherein the front wheel set (14) comprises two arms (16) at the end of which at least one wheel (18) is mounted and which are connected to each other only at their other end by the front transverse axis (X-X) of the chassis so as to facilitate loading onto a bicycle rack when the stroller system is in its deployed configuration.

9. The stroller system according to any one of claims 1 to 8, wherein, when moving from their deployed position to their folded position, the front (14) and rear (20) wheel sets pivot in the same direction of rotation towards the backrest (10) of the seat base structure.

10. The stroller system according to any one of claims 1 to 9, further comprising removable bicycle seat accessories (80, 82).

11. The stroller system according to any one of claims 1 to 10, further comprising a front handle located at the front of the chassis and a rear handle located at the level of the backrest of the seat base structure, the front and rear handles making it possible to manually lift the stroller during its loading or unloading.

12. The stroller system according to any one of claims 1 to 11, wherein the front wheel set comprises at least one retractable footrest system.
